# EUROPÄISCHE PATENTSCHRIFT

(11) **EP 2 374 669 B1**
(45) Veröffentlichungstag und Bekanntmachung des Hinweises auf die Patenterteilung: **31.10.2012**
(21) Anmeldenummer: 10015433.5
(22) Anmeldetag: 08.12.2010
(51) Int. Cl.: B60R 21/34

(54) **Stossfängerstruktur mit integriertem Energieabsorber**
Bumper structure with integrated energy absorber
Structure de pare-chocs dotée d'un absorbeur d'énergie intégré

(30) Priorität: 08.04.2010 DE 202010004709 U
(43) Veröffentlichungstag der Anmeldung: 12.10.2011
(73) Patentinhaber: SMP Deutschland GmbH, 79268 Bötzingen (DE)
(72) Erfinder: Rinderlin, Jürgen, 79279 Vörstetten (DE)
(74) Vertreter: Patentanwälte Westphal, Mussgnug & Partner

(56) Entgegenhaltungen:
- EP-A1- 2 006 163
- WO-A1-2010/069454
- DE-A1- 10 107 287
- FR-A1- 2 750 936
- FR-A1- 2 836 878
- FR-A1- 2 840 573

## Beschreibung

Die vorliegende Erfindung betrifft eine Stossfängeranordnung für Kraftfahrzeuge mit einem in einem Hohlraum zwischen einem Stossfänger und einem Stossfängerquerträger angeordneten energieabsorbierenden Element.

Energieabsorbierende Strukturen im Bereich der Stossfängeranordnung werden immer mehr dazu eingesetzt, um neben dem Schutz der dahinterliegenden Bauteile, vor allem auch den Schutz für Fußgänger zu verbessern. Dazu werden üblicherweise in dem Hohlraum zwischen dem meist schalenförmig aufgebauten Stossfänger und dem Stossfängerquerträger energieabsorbierende Elemente oder energieabsorbierende Strukturen integriert, die dazu dienen, die bei einem Zusammenprall mit einem Fußgänger im Bereich des Beinabschnitts auftretende Stossenergie soweit wie möglich zu absorbieren und damit das Verletzungsrisiko für den Fußgänger zu minimieren.

Zum größten Teil wird heute beim Fußgängerschutz im Bereich des Beinaufschlags zwischen Stossfänger und Biegeträger ein Kunststoffpolymerschaum als energieabsorbierendes Element eingesetzt, wobei in den Zwischenraum zwischen Biegeträger und Stossfänger ein Schaum in Form von Schaumteilen oder Schaumblöcken eingelagert wird.

So beschreibt die DE 100 42 560 B4 eine Trägerstruktur eines Kraftfahrzeugs mit einem Frontend, dass zweischalig ausgebildet ist, mit einem äußeren, bei relativ wenig Krafteinwirkung verformbaren Frontendschalenteil (Stossfänger) und einem inneren, relativ steifen Frontendschalenteil (Stossfängerquerträger), wobei zwischen dem Stossfängerquerträger und dem Stossfänger ein Deformationsformteil angeordnet ist, das eine Schaumstruktur aufweist.

In der EP 1 577 168 A1 werden Stossfänger als energieabsorbierende Bauteile beschrieben, die als blasgeformte Hohlkörper ausgebildet sind, die eine Schaumstofffüllung beidseitig umschließen.

Die Verwendung von Schaum als energieabsorbierendes Mittel hat zwar den Vorteil, dass er leicht ist und kostengünstig eingesetzt werden kann, allerdings benötigt der Schaum relativ viel Bauraum und hat den zusätzlichen Nachteil, dass e Schaum im Falle eines Zusammenpralls nicht zu 100 % reversibel ist, was bedeutet, dass das energieabsorbierende Mittel nach einem Zusammenstoss einen Teil seines Wirkungsgrades verliert.

Alternativ wurden daher auch andere energieabsorbierende Systeme erprobt. So wird in der DE 10 2005 020 730 A1 ein Stossfängersystem für Kraftfahrzeuge beschrieben, bei dem zwischen dem Stossfängerquerträger und dem Stossfänger Formationselemente in Form von Hohlprofilabschnitten zur Energieabsorption angeordnet sind. Die DE 198 61 026 A1 beschreibt energieabsorbierende Stossfänger von Kraftfahrzeugen mit Energieabsorbern, die zwischen Stossfänger und Stossfängerquerträger angeordnet sind, wobei die Energieabsorber Versteifungselemente enthalten, die von einer an dem Stossfängerquerträger befestigbaren rückseitigen Haltestruktur wegweisende freistehende Vorderseiten (Rippen) aufweisen und sich unabhängig voneinander unter Energieaufnahme verformen können. Der Nachteil dieser beiden oben genannten Systeme zur Energieabsorption für den Fußgängerbeinschutz besteht darin, dass die energieabsorbierenden Elemente so konzipiert sind, dass sie sich bei einem Zusammenprall mit einem Fußgänger irreversibel verformen, wofür die oben geschilderten energieabsorbierenden Strukturen dazu noch relativ viel Bauraum benötigen.

Aus der DE 44 01 874 C1 ist ein zwischen einer Stossfängerhülle und einem Stossfängerquerträger eines Kraftfahrzeuges einlegbares Dämpfungselement bekannt, das über einer aus zwei Federschenkeln und einem die Federschenkel verbundenen Steg bildende Rippenstruktur auf seiner sich in Längsrichtung des Stossfängerquerträgers erstreckende Längsrippe sowie über eine Anzahl von rechtwinkligen zu der Längsrippe ausgerichteten Querrippen verfügt. Diese gitterartige Rippenstruktur verfügt über eine insbesondere bei hohen Kollisionsgeschwindigkeiten elastische Verformbarkeit, allerdings ist hier die Energieaufnahme bei Kollisionen mit verhältnismäßig geringen Geschwindigkeiten nicht sehr groß und die Struktur verhält sich relativ starr, so dass diese Anordnung als Fußgängerschutz nicht besonders geeignet ist.

In der EP 1 564 079 A1 wird ein Stossfängerabsorber für den Fußgängerschutz beschrieben, der als W-förmiges Schaumteil zwischen Stossfängerquerträger und Stossfängerhülle angeordnet ist. Auch diese Anordnung hat den Nachteil, dass relativ viel Bauraum benötigt wird, um einen wirksamen Fußgängerschutz zu realisieren. Hinzukommt, dass das Bauteil selber relativ kompliziert aufgebaut ist, was die Fertigungskosten negativ beeinflusst.

DieFR 2 840 573 A1 bzw. die FR 2 836 878 A1 offenbaren eine Stossfängeranordnung gemäß dem Oberbegriff des Anspruchs 1.

Allgemein besteht das Problem, dass die energieabsorbierenden Systeme für den Fußgängerschutz im Bereich des Stossfängers immer relativ viel Bauraum benötigen, da ein wirksamer Schutz des Fußgängers nur dann gewährleistet werden kann, wenn ausreichend Platz für eine Deformation des Absorbers zur Verfügung steht.

Dem steht entgegen, dass der Konstrukteur eines Kraftfahrzeugs stets das Bestreben hat, Bauraum einzusparen und zu reduzieren, da auf Grund der hohen gesetzlichen Anforderungen im Bezug auf Insassenschutz und Sicherheit sowie der hohen Ausstattungserwartungen der Endverbraucher die Bauräume, insbesondere im Frontendbereich für den Konstrukteur immer knapper werden. Um Überlängen eines Fahrzeuges zu vermeiden, Designvorhaben einzuhalten und dabei auch den Verbrauch, der direkt von der Länge des Fahrzeugs bzw. dem Gewicht des Fahrzeugs abhängt, in Grenzen zu halten, ohne dabei auf Funktionalität und Qualität verzichten zu müssen, sind die Konstrukteure gezwungen, zusätzlichen Bauraum durch die technischen Lösungen zu gewinnen. Auf Grund der Blocklänge der für den Fußgängerschutz eingesetzten Schäume bzw. der Deformationswege der sonstigen Absorptionselemente ist jedoch mit den derzeit auf dem Markt angebotenen Konzepten für einen Fußgängerschutz eine weitere Reduzierung des Bauraums im Frontendbereich des Fahrzeugs nicht möglich, ohne dass dabei die Sicherheit für die Fußgänger darunter leidet und die gesetzlichen Vorhaben bezüglich der Energieabsorption für den Fall eines Zusammenpralls mit einem Fußgänger nicht mehr erfüllbar sind.

Es besteht somit weiterhin das Problem eine Stossfängeranordnung zur Verfügung zu stellen, die beiden Anforderungen gerecht wird, nämlich der gesetzlichen Forderung nach einem effizienten Fußgängerschutz und der Anforderung an den Konstrukteur nach einer Bauraumeinsparung, und die Nachteile des Standes der Technik nicht aufweist.

Gelöst wird dieses Problem durch eine Stossfängeranordnung mit den Merkmalen des Anspruchs 1. Vorteilhafte Weiterentwicklungen und Ausgestaltungen der Erfindung sind Gegenstand der Unteransprüche.

Es wurde gefunden, dass mit Hilfe eines Spritzgussabsorbers, der in dem Hohlraum zwischen Stossfänger und Stossfängerquerträger angeordnet ist, die gesetzlichen Grenzwerte für den Fußgängerschutz beim Beinaufschlag eingehalten werden können und gleichzeitig der erforderliche Bauraum für den Fußgängerschutz auf ein Minimum reduziert werden kann. Erreicht wird dies durch ein Spritzgussabsorber, der über die gesamte Breite des Prüfbereichs für den Fußgängerschutz in dem Hohlraum zwischen Stossfänger und Stossfängerquerträger angeordnet ist und dabei in die Trägerstruktur des Stossfängers integriert ist.

Vorzugsweise besteht der Spritzgussabsorber aus einem thermoplastischen Kunststoff, der gegebenenfalls mit einem Gewebe und/oder Glas- oder Kohlefasern verstärkt sein kann. Bei dem thermoplastischen Kunststoff handelt es sich bevorzugt um Polypropylen oder Polyamid.

Der erfindungsgemäße Spritzgussabsorber wird nachträglich an die Trägerstruktur des Stossfängers montiert, wobei der Spritzgussabsorber geklebt, geschraubt, geclipst, geklemmt und/oder genietet wird.

Als geometrische Grundform kommt für den integrierten Energieabsorber eine beliebige Form aus der Gruppe Rechteck, Kreis, Dreieck, Oktaeder, Quadrat und/oder Kombination oder Abwandlungen davon in Frage, was nicht zuletzt ganz allgemein vom geplanten Design im Frontendbereich und dem Fahrzeugtyp abhängt.

So ist vorgesehen, die oben genannten Grundformen als Energieabsorber in der Trägerstruktur für den Stossfänger zu integrieren, um damit die bei einem Zusammenprall mit einem Fußgänger auftretende Energie auf einem kurzem Weg abzubauen, ohne dass dazu ein zusätzliches Bauteil erforderlich ist. Neben der Auswahl der Grundform steht eine Vielzahl weiterer Einstellparameter zur Verfügung, mit deren Hilfe das Deformationsverhalten des Absorbers dem jeweiligen Fahrzeug so angepasst werden kann, dass die Anforderungen an den Fußgängerschutz erfüllt werden.

So können beispielsweise das Material, die Wandstärke, die Höhe des Absorbers, die Winkelöffnung oder auch Verstärkungsmittel, wie z. B. Rippen oder Löcher, variiert werden. Es ist grundsätzlich auch möglich, den Energieabsorber aus einem anderen Material herzustellen als die Trägerstruktur des Stossfängers. Die Wandstärke des Energieabsorbers kann für jede Position individuell gestaltet werden. Darüber hinaus kann über Knickstellen das Verformungsverhalten, die Widerstandsfähigkeit sowie das Faltverhalten des Absorbers eingestellt werden.

Optional kann die Steifigkeit des Strukturrahmens des Absorbers zusätzlich durch mindestens einen Deckel, der zwischen Absorber und Stoßfänger angeordnet ist und am Absorber direkt befestigt wird, erhöht werden, um dadurch den Fußgängerschutz positiv zu beeinflussen. Die Anordnung des Deckels zur Versteifung des Absorberprofils kann optional über die gesamte Breite des Absorbers erfolgen oder es können in Segmenten örtlich einzelne Deckel montiert werden.

Dabei ist für den Fall des Beinimpakts stets das Ziel, dass sich der Spritzgussabsorber auf Grund seiner Geometrie so verformt, dass sich das Bein über den Absorber abrollt.

Im Folgenden wird die Erfindung anhand einer Zeichnung ausführlich erläutert.

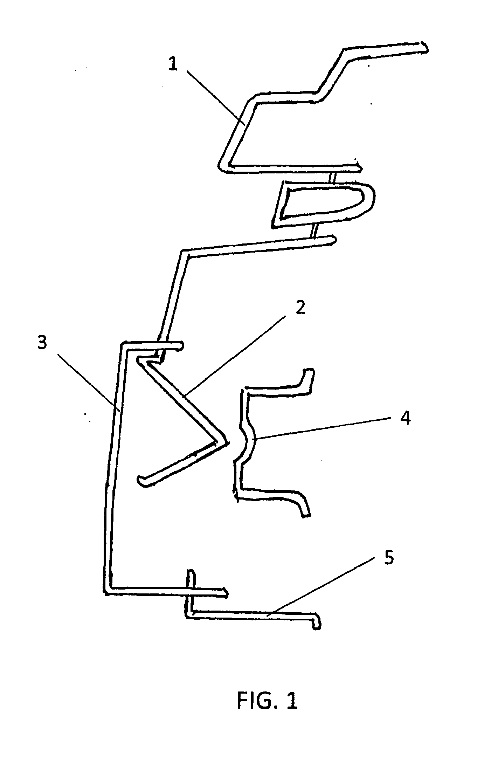

Dabei zeigt die Figur 1 eine Schnittdarstellung eines Ausschnittes aus dem Frontendbereich eines Kraftfahrzeugs mit einer Trägerstruktur 1 für den Stossfänger, einem Stossfänger 3 und einem Stossfängerquerträger 4, wobei in den Träger 1 ein Spritzgussabsorber 2 integriert ist. Der Spritzgussabsorber 2 besitzt eine auf den Stossfängerquerträger 4 abgestimmte dreieckförmige Geometrie. Der Stossfänger 3 selber ist am Stossfängerträger 1 und am Spoilerträger 5 befestigt.

Optional kann ein Deckel zur Erhöhung der Steifigkeit der Trägerstruktur 1 des Stossfängers eingesetzt werden. Dieser Deckel ist zwischen Stossfänger 3 und Spritzgussabsorber 2 angeordnet und direkt am Spritzgussabsorber 2 befestigt.

Bei der in der Figur 1 gezeigten Dreiecksform handelt es sich um eine vorteilhafte Ausgestaltung des Spritzgussabsorbers, in der keine Einschränkung zu sehen ist. Je nach Anforderungen und Konstruktionsvorgaben kann der Spritzgussabsorber eine beliebige andere Geometrie aufweisen kann und dabei z. B. kreisförmig, rechteckig oder auch oktaedrisch ausgebildet sein.

### Bezugszeichenliste

- 1: Trägerstruktur
- 2: Spritzgussabsorber
- 3: Stossfänger
- 4: Stossfängerquerträger
- 5: Spoilerträger

## Patentansprüche

1. Stoßfängeranordnung für Kraftfahrzeuge mit einem in einem Hohlraum zwischen einem Stoßfänger (3) und einem Stoßfängerquerträger (4) angeordnetem energieabsorbierenden Element, wobei das energieabsorbierende Element ein über die gesamte Breite des Fahrzeugs angeordneter Spritzgussabsorber (2) ist,
der Spritzgussabsorber (2) als in der Trägerstruktur (1) des Stoßfängers integrierter Energieabsorber ausgebildet ist,
**dadurch gekennzeichnet,**
**dass** der Spritzgussabsorber (2) nachträglich an die Trägerstruktur (1) des Stoßfängers montiert ist, und dass der Spritzgussabsorber (2) an die Trägerstruktur (1) des Stoßfängers geklebt, geschraubt, geclipst, geklemmt und/oder genietet ist.

2. Stoßfängeranordnung nach Anspruch 1,
**dadurch gekennzeichnet, dass**
der Spritzgussabsorber (2) aus einem thermoplastischen Kunststoff besteht.

3. Stoßfängeranordnung nach Anspruch 1 oder 2,
**dadurch gekennzeichnet, dass**
der thermoplastische Kunststoff mit einem Gewebe und/oder Glas- oder Kohlefasern verstärkt ist.

4. Stoßfängeranordnung nach einem der Ansprüche 1 bis 3,
**dadurch gekennzeichnet, dass**
der thermoplastische Kunststoff Polypropylen oder Polyamid ist.

5. Stoßfängeranordnung nach einem der Ansprüche 1 bis 4,
**dadurch gekennzeichnet, dass**
der Spritzgussabsorber (2) eine geometrische Grundform ausgewählt aus der Gruppe Rechteck, Kreis, Dreieck, Oktaeder, Quadrat und/oder Kombination davon und/oder Abwandlungen davon aufweist.

6. Stoßfängeranordnung nach einem der Ansprüche 1 bis 5,
**dadurch gekennzeichnet, dass**
zwischen dem Spritzgussabsorber (2) und dem Stoßfänger (3) mindestens ein Deckel zur Versteifung der Trägerstruktur (1) angeordnet ist, wobei der Deckel (6) direkt mit dem Spritzgussabsorber (2) verbunden ist.

## Claims

1. A bumper assembly for motor vehicles having an energy-absorbing element arranged in a cavity between a bumper (3) and a bumper cross beam (4), the energy-absorbing element being an injection-moulded absorber (2) arranged over the entire width of the vehicle, wherein the injection-moulded absorber (2) is formed as an energy absorber integrated in the beam structure (1) of the bumper, **characterized in that** the injection-moulded absorber (2) is subsequently mounted to the beam structure (1) of the bumper, and that the injection-moulded absorber (2) is glued, screwed, clipped, clamped and/or riveted to the beam structure (1) of the bumper.

2. The bumper assembly according to Claim 1,
**characterized in that**
the injection-moulded absorber (2) is composed of a thermoplastic resin.

3. The bumper assembly according to Claim 1 or 2,
**characterized in that**
the thermoplastic resin is reinforced with a fabric and/or glass or carbon fibres.

4. The bumper assembly according to any of Claims 1 to 3,
**characterized in that**
the thermoplastic resin is polypropylene or polyamide.

5. The bumper assembly according to any of Claims 1 to 4,
**characterized in that**
the injection-moulded absorber (2) has a basic geometric form selected from the group of rectangle, circle, triangle, octahedron, square and/or a combination thereof and/or variations thereof.

6. The bumper assembly according to any of Claims 1 to 5,
**characterized in that**
at least one lid is arranged between the injection-moulded absorber (2) and the bumper (3) for the stiffening of the beam structure (1), the lid (6) being directly connected with the injection-moulded absorber (2).

## Revendications

1. Dispositif de pare-chocs de véhicule automobile comportant un élément absorbant l'énergie, installé dans la cavité entre un pare-choc (3) et une traverse de pare-choc (4), cet élément absorbant l'énergie étant un absorbeur (2), moulé par injection, s'étendant sur toute la largeur du véhicule, cet l'absorbeur moulé par injection (2) étant réalisé comme absorbeur d'énergie intégré dans la structure de support (1) du pare-choc,
dispositif **caractérisé en ce que**
l'absorbeur moulé par injection (2) installé extérieurement sur la structure de support (1) du pare-choc et l'absorbeur (2) est collé, vissé, clipsé, pincé et/ou riveté sur la structure de support (1) du pare-choc.

2. Dispositif de pare-choc selon la revendication 1,
**caractérisé en ce que**
l'absorbeur moulé par injection (2) est en une matière thermoplastique.

3. Dispositif de pare-choc selon la revendication 1 ou 2,
**caractérisé en ce que**
la matière thermoplastique est renforcée par un tissu et/ou par des fibres de verre ou de carbone.

4. Dispositif de pare-choc selon l'une des revendications 1 à 3,
**caractérisé en ce que**
la matière thermoplastique est du polypropylène ou un polyamide.

5. Dispositif de pare-choc selon l'une des revendications 1 à 4,
**caractérisé en ce que**
l'absorbeur moulé par injection (2) a une forme de base géométrique choisie dans le groupe comprenant les formes suivantes : rectangle, cercle, triangle, octaèdre, carré et/ou des combinaisons de ces formes et/ou des variantes de ces formes.

6. Dispositif de pare-choc selon l'une des revendications 1 à 5,
**caractérisé par**
au moins un couvercle entre l'absorbeur moulé par injection (2) et le pare-choc (3) pour rigidifier la structure de support (1), le couvercle (6) étant relié directement à l'absorbeur moulé par injection (2).
